Europäisches Patentamt

European Patent Office

Office européen des brevets

(19)

(11) Veröffentlichungsnummer: **0 122 536**
**A2**

(12) # EUROPÄISCHE PATENTANMELDUNG

(21) Anmeldenummer: **84103682.5**

(22) Anmeldetag: **04.04.84**

(51) Int. Cl.³: **G 02 F 1/133**

(30) Priorität: **18.04.83 DE 3314004**
**27.01.84 DE 3402735**

(43) Veröffentlichungstag der Anmeldung:
**24.10.84 Patentblatt 84/43**

(84) Benannte Vertragsstaaten:
**CH DE FR GB LI**

(71) Anmelder: **Merck Patent Gesellschaft mit beschränkter Haftung**
**Frankfurter Strasse 250**
**D-6100 Darmstadt(DE)**

(72) Erfinder: **Wilczek, Peter**
**Neugasse 31**
**D-6234 Hattersheim 3(DE)**

(72) Erfinder: **Urban, Manfred, Dr.**
**Mainzer Strasse 14**
**D-6108 Weiterstadt(DE)**

(72) Erfinder: **Bäumer, Wilhelm, Dr.**
**Burgweg 10**
**D-6101 Rossdorf 1(DE)**

(54) **Elektrooptisches Anzeigeelement.**

(57) Elektrooptisches Anzeigeelement mit einer Flüssigkristallschicht zwischen einer Deck- und einer Grundplatte, die zusammen mit einer elektrisch leitfähige Abstandshalter enthaltenden Umrandung eine abgeschlossene Zelle bilden, wobei zwischen gegenüberliegenden Elektroden eine elektrische Verbindung besteht, und ein Verfahren zur Herstellung solcher Anzeigeelemente, wobei die Umrandung in Form eines Klebers, der die Abstandshalter enthält, auf mindestens eine der Platten aufgebracht wird und anschließend die beiden Platten aufeinandergepreßt werden.

EP 0 122 536 A2

Croydon Printing Company Ltd.

Elektrooptisches Anzeigeelement

Die Erfindung betrifft elektrooptische Anzeigeelemente mit einer Flüssigkristallschicht zwischen einer Deck- und einer Grundplatte, die zusammen mit einer Umrandung eine abgeschlossene Zelle bilden, wobei durch in der Umrandung vorhandene elektrische leitfähige Abstandshalter eine elektrische Verbindung zwischen gegenüberliegenden Elektroden besteht.

Zur Steuerung einer elektrooptischen Anzeigevorrichtung sind auf den beiden Platten entsprechende Elektroden notwendig. In der Regel werden die Steuerelektroden auf der einen Platte und die gemeinsame Gegenelektrode auf der anderen Platte angebracht. Zwischen beiden Platten befindet sich eine Umrandung, welche zusammen mit den Platten das flüssigkristalline Material einschließt. Die Stärke dieser Umrandung und damit die Dicke der Flüssigkristallschicht werden mit Hilfe von Abstandshaltern eingestellt. Es handelt sich hierbei um Teilchen mit möglichst genau definierten geometrischen Maßen. Bewährt haben sich hierfür Glasfaserabschnitte (DE-OS 32 15 492), kugelförmige Kieselgelteilchen oder kugelförmige Aluminiumoxidteilchen. Die Abstandshalter werden dem Kleber zugemischt, mit dem die beiden Platten verklebt werden und der auf diese Weise eine Umrandung von definierter Schichtdicke ergibt.

Bei der Herstellung elektrooptischer Anzeigeelemente tritt nun das Problem auf, eine elektrische Verbindung zwischen der die Steuerelektroden und die elektrischen Außenanschlüsse tragenden einen Platte und der auf der anderen Platte befindlichen Gegenelektrode herzustellen.

In der DE-OS 31 25 218 wird eine elektrooptische Anzeigevorrichtung und ein Verfahren zu ihrer Herstellung beschrieben, bei welcher außerhalb der Umrandung entsprechende Elektroden auf beiden Platten gegenüberliegend angebracht sind, wobei die Verbindung derselben mit Hilfe einer elektrisch leitenden Paste erfolgt. Nachteilig bei dieser Anzeigevorrichtung ist die Beschränkung der Gestaltungsmöglichkeiten der Umrandung oder der die Gegenelektrode tragenden Platte; außerdem wird die Herstellung einer derartigen Anzeigevorrichtung durch das Anbringen der Paste kompliziert, insbesondere dann, wenn auf der einen Platte eine Vielzahl von Gegenelektroden vorhanden sind, wie diese bei einem Multiplexbetrieb der Anzeigeeinrichtung benötigt werden.

Zwar sind aus DE-OS 29 31 113 Abstandshalter mit rechteckigem Profil bekannt, die auch an ihrer Oberfläche elektrisch leitend sein können, aber solche Abstandshalter mit rechteckigem Profil sind einerseits sehr schwierig mit definierten Abmessungen herzustellen und neigen andererseits zum Stapeln beim Preßvorgang.

Die Aufgabe der Erfindung besteht darin, ein Verfahren zur Herstellung einer elektrooptischen Anzeigevorrichtung anzugeben, welches die bekannten Mängel vermeidet.

Die Aufgabe wurde dadurch gelöst, daß man Abstandshalter verwendet, die einen runden Querschnitt haben und elektrisch leitend sind.

Überraschenderweise wurde gefunden, daß Abstandshalter, die einen runden Querschnitt haben und eine elektrische Leitfähigkeit aufweisen, durch die Kontaktierung längs der Mantellinie bereits eine völlig ausreichende elektrische Verbindung zwischen den beiden Platten herzustellen erlauben. Sie sind außerdem nicht stapelnd beim Preßvorgang, leicht mit definierten Abmessungen herzustellen und von ausreichender mechanischer Stabilität, d. h. es treten im Anzeigeelement keine Kontrasteinbußen auf.

Gegenstand der Erfindung sind somit Abstandshalter für elektrooptische Anzeigeelemente, die einen runden Querschnitt haben und eine elektrische Leitfähigkeit aufweisen und die Verwendung solcher Abstandshalter zwischen Deck- und Grundplatte in einem elektrooptischen Anzeigeelement allein oder im Gemisch mit nicht leitfähigen Abstandshaltern.

Weiterhin Gegenstand der Erfindung ist ein elektrooptisches Anzeigeelement mit einer Flüssigkristallschicht zwischen einer Deck- und einer Grundplatte, die zusammen mit einer Umrandung eine abgeschlossene Zelle bilden, wobei die Umrandung elektrisch leitfähige Abstandshalter mit rundem Querschnitt enthält, wodurch zwischen gegenüberliegenden Elektroden eine elektrische Verbindung besteht, und ein Verfahren zur Herstellung solcher elektrooptischer Anzeigeelemente, wobei die Umrandung in Form eines Klebers, der die elektrisch leitfähigen Abstandshalter enthält, auf mindestens eine der Platten aufgebracht wird und anschließend die Platten aufeinandergepreßt werden.

Als Abstandshalter können prinzipiell alle elektrisch leitfähigen Teilchen mit rundem Querschnitt und annähernd einheitlichen geometrischen Maßen verwendet werden, deren Geometrie (z. B. Kugeln) oder deren Materialeigenschaften (z. B. Brechen von übereinanderliegenden Glasfasern) ein Stapeln der Teilchen beim
Preßvorgang ausschließen. Vorzugsweise werden elliptische, kugelförmige oder zylinderförmige Abstandshalter verwendet.

Besonders bevorzugt sind Faserabschnitte. Die geometrischen Maße der Abstandshalter werden so gewählt,
daß sich eine Schichtdicke der Umrandung von 2 bis
20 µm, vorzugsweise 7 bis 15 µm, ergibt. Bei Verwendung von Faserabschnitten werden Durchmesser im Bereich von 2 bis 20 µm, vorzugsweise 5 bis 15 µm,
insbesondere 6 bis 12 µm, gewählt. Die Länge der
Faserabschnitte liegt vorzugsweise unterhalb 100 µm,
besonders bevorzugt ist der Bereich von 5 - 50 µm.

Als Materialien für die Abstandshalter kommen sowohl
elektrische Leiter wie Metalle oder Kohlenstoff als
auch mit einer leitfähigen Schicht überzogenen Nichtleiter wie z. B. Glas, Quarz, Kieselgel oder Aluminiumoxid in Frage.

Als Beschichtungsmaterial für an sich nicht leitfähige
Abstandshalter sind prinzipiell alle Materialien geeignet, die elektrisch leitfähige Schichten ergeben.
Beispielsweise kann Zinndioxid oder Indiumzinnoxid
(ITO) verwendet werden. Solche Schichten können nach
literaturbekannten Methoden aus Lösungen oder durch
Verfahren wie Vakuumaufdampfen, Kathodenzerstäubung
oder CVD (Chemical Vapour Deposition) aufgebracht
werden. Besonders gut geeignet sind auch Metalle,
da diese schon in dünner Schicht eine gute Leitfähigkeit aufweisen, so daß die Beschichtung die Abmessungen
der Abstandshalter nur vernachlässigbar verändert.
Besonders bevorzugt sind Metalle wie z. B. Silber,
Kupfer oder Nickel, die eine sehr gute elektrische Leitfähigkeit aufweisen. Weiterhin bevorzugt sind Metalle, die sich mit einfachen chemischen Verfahren, beispielsweise stromlos, abscheiden lassen. Die Dicke solcher Metallschichten kann 10 - 500 nm, vorzugsweise 50 - 150 nm, betragen.

Bei der Verwendung von zylinderförmigen Abstandshaltern müssen die Materialeigenschaften (z. B. Sprödigkeit) ein Stapeln der Abstandshalter beim Preßvorgang verhindern. Vorzugsweise werden deshalb als zylinderförmige Abstandshalter Faserabschnitte von Graphitfasern, Kohlenstoffasern oder elektrisch leitfähig beschichteten Glasfasern verwendet. Bei den Glasfasern kann diese Beschichtung sowohl vor als auch nach dem Zerkleinern auf die gewünschte Länge vorgenommen werden.

Die elektrisch leitfähigen Abstandshalter werden allein oder im Gemisch mit nicht leitfähigen Abstandshaltern zwischen Deck- und Grundplatte eines elektrooptischen Anzeigeelements eingebracht.

Vorzugsweise werden die erfindungsgemäßen Abstandshalter einem Kleber beigemischt, welcher auf mindestens eine der beiden Platten eines elektrooptischen Anzeigeelements aufgebracht wird. Die Platten werden anschließend aufeinandergepreßt, wodurch eine elektrisch leitende Verbindung zwischen gegenüberliegenden Elektroden entsteht.

Das Verhältnis der elektrisch leitenden Abstandshalter zur Elektrodenfläche muß so gewählt werden, daß eine elektrisch leitende Verbindung zwischen gegenüberliegenden Elektroden gewährleistet ist. Vorzugsweise beträgt dieses Verhältnis 0,1 bis $100 \cdot 10^{-6}$ g/cm$^2$, insbesondere 0,5 bis $50 \cdot 10^{-6}$ g/cm$^2$.

Die Gesamtmenge an elektrisch leitfähigen und elektrisch nicht leitfähigen Abstandshaltern muß einen konstanten Abstand zwischen beiden Platten sicherstellen. Sie liegt vorzugsweise im Bereich von 10 bis 100 . $10^{-6}$ g/cm$^2$.

Das erfindungsgemäße Verfahren ermöglicht die Einsparung eines Arbeitsschrittes bei der Displayfertigung.

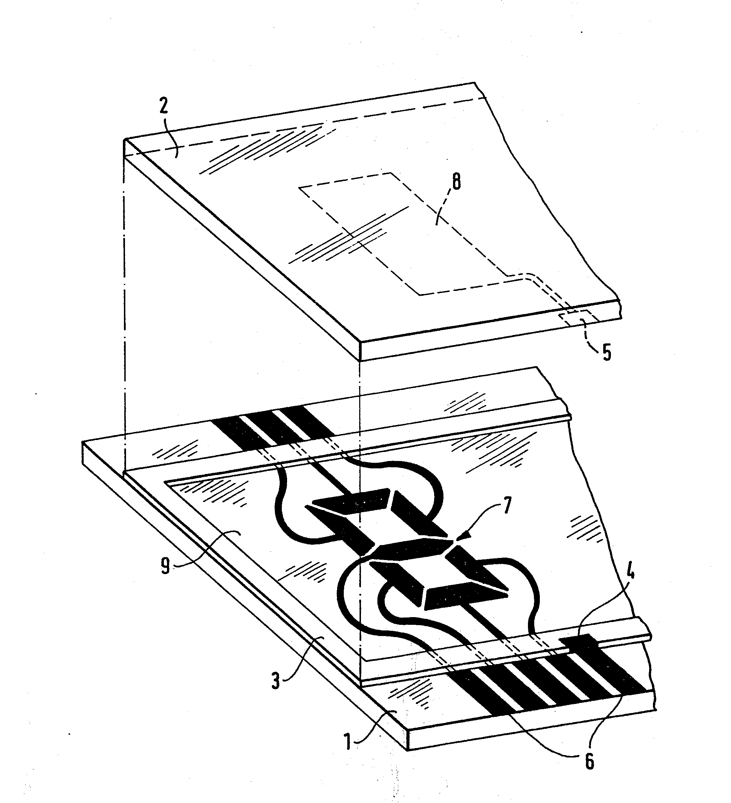

Die Erfindung wird anhand eines Ausführungsbeispiels näher erläutert, welches in der Zeichnung dargestellt ist.

Es wird davon ausgegangen, daß die Platte 1 durchscheinend ist und eine Anzeigevorrichtung 7 trägt, deren Steuerelektroden mit den elektrischen Außenanschlüssen 6 verbunden sind. Im Bereich der Anzeigevorrichtung 7 trägt die andere Platte 2 eine Gegenelektrode 8, die mit einer Elektrode 5 verbunden ist. Die Platte 1 trägt gegenüber der Elektrode 5 eine Elektrode 4.

Der Rahmen 3 wird in Form eines Klebers auf die Platte 1 oder 2 aufgebracht, wobei der Kleber elektrisch leitende Glasfasern enthält. Eingesetzt werden mit einer 100 nm dicken Silberschicht belegte Glasfaserabschnitte (Länge: 1 - 50 µm, Durchmesser: 10 µm). Die Glasfaserabschnitte werden in einer Menge von 0,5 . $10^{-6}$ g/cm$^2$ verwendet. Durch das Aufeinanderpressen der Platten 1 und 2 entsteht zwischen den Platten eine Zelle 9, die durch die Umrandung 3, d. h. die Klebschicht begrenzt wird. Durch die Glasfasern innerhalb des Klebers bzw. der Umrandung 3 wird eine parallele Lage der Platten 1 und 2 zueinander sichergestellt,

wobei der Abstand derselben dem Glasfaserdurchmesser entspricht, da die Glasfasern aufgrund ihrer Sprödigkeit im Falle des Aufeinanderliegens beim Preßvorgang zerspringen. Durch entsprechende Ausbildung der Elektroden 4 und 5 und einem entsprechenden Mischungsverhältnis von Kleber und Glasfasern wird eine einwandfreie elektrische Verbindung zwischen den beiden Elektroden nach dem Aufpressen erreicht. In die Zelle 9 können unbeschichtete Glasfasern als Abstandshalter eingebracht werden, so daß sowohl die beschichteten als auch die unbeschichteten Glasfasern als Abstandhalter wirken. Die Anzeigeelemente zeigen auch nach längerem Betrieb keine Kontrasteinbußen.

In einem weiteren Ausführungsbeispiel gleicher Ausführungsform werden die dort angegebenen leitfähig beschichteten Glasfaserabschnitte im Gemisch mit 50 Gew.-% nicht beschichteten Glasfaserabschnitten eingesetzt. Das so erhaltene elektrooptische Anzeigeelement weist eine einwandfreie elektrische Verbindung zwischen den beiden gegenüberliegenden Elektroden auf.

Patentansprüche:

1. Abstandshalter für elektrooptische Anzeigeelemente, dadurch gekennzeichnet, daß sie einen runden Querschnitt und eine elektrische Leitfähigkeit aufweisen.

2. Verwendung der Abstandshalter nach Anspruch 1, allein oder im Gemisch mit nicht leitfähigen Abstandshaltern zwischen Deck- und Grundplatte in einem elektrooptischen Anzeigeelement.

3. Elektrooptisches Anzeigeelement mit einer Flüssigkristallschicht zwischen einer Deck- und einer Grundplatte, die zusammen mit einer Umrandung eine abgeschlossene Zelle bilden, wobei zwischen gegenüberliegenden Elektroden eine elektrische Verbindung besteht, dadurch gekennzeichnet, daß die Umrandung Abstandshalter nach Anspruch 1 enthält.

4. Verfahren zur Herstellung elektrooptischer Anzeigeelemente nach Anspruch 3, wobei die Umrandung in Form eines Klebers, der die Abstandshalter enthält, auf mindestens eine der Platten aufgebracht wird und anschließend die beiden Platten aufeinandergepreßt werden, dadurch gekennzeichnet, daß dem Kleber eine elektrische Leitfähigkeit aufweisende Abstandshalter mit rundem Querschnitt zugesetzt werden.

PAT LOG 3/2 271283